# EUROPEAN PATENT SPECIFICATION

(11) **EP 0 812 998 B1**
(45) Date of publication and mention of the grant of the patent: **22.08.2001**
(21) Application number: 97304002.5
(22) Date of filing: 10.06.1997
(51) Int. Cl.: F16D 13/58, F16F 1/32, F16D 25/0638

(54) **Multiple disk friction coupling device**
Reibungslamellenkupplungsgerät
Appareil d'accouplement à lamelles multiples par friction

(30) Priority: 10.06.1996 JP 16872296
(43) Date of publication of application: 17.12.1997
(73) Proprietor: DYNAX CORPORATION, Chitose-shi, Hokkaido (JP)
(72) Inventor: Han, Zhi-peng, Chitose-shi, Hokkaido (JP); Tasaka, Shigeki, Chitose-shi, Hokkaido (JP)
(74) Representative: Meddle, Alan Leonard

(56) References cited:
- WO-A-87/03348
- DE-C- 400 517
- DE-C- 409 973
- DE-C- 692 665
- DE-C- 721 154
- FR-A- 1 010 503
- FR-A- 1 575 044
- FR-A- 2 193 437
- GB-A- 2 149 863
- GB-A- 2 158 183
- US-A- 4 276 947

## Description

### BACKGROUND OF THE INVENTION

### 1. Field of the Invention

THE PRESENT INVENTION relates to a spring plate to be used in a multiple disk friction coupling device such as a multiple disk clutch or a braking mechanism.

### 2. Description of Related Art

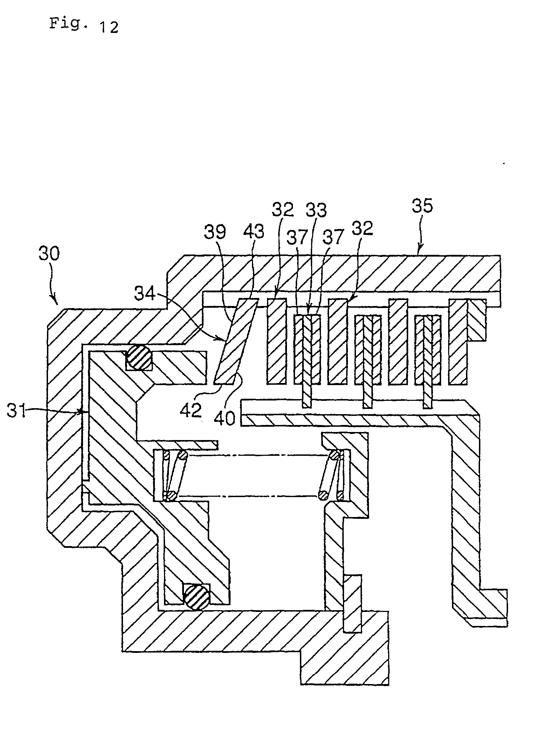

A dish-like spring plate 34 is installed in a prior art multiple disk clutch mechanism 30 shown in Fig. 12 which is one example of a multiple disk friction coupling device.

The spring plate 34 is pushed at an inner diameter end portion 42 thereof by a piston 31, and in turn a mating plate 32 is pushed by an outer diameter end portion 43 of the plate 42. The mating plate 32 thus pushed is pressed against a friction plate 33 which makes a mutual rotating motion, thereby to transmit a torque.

Since the spring plate 34 has an appropriate elasticity, a friction coupling pressure caused by the advance of the piston is made to rise gradually by this elasticity during the initial period of friction coupling, that is, to moderate sudden torque transmission.

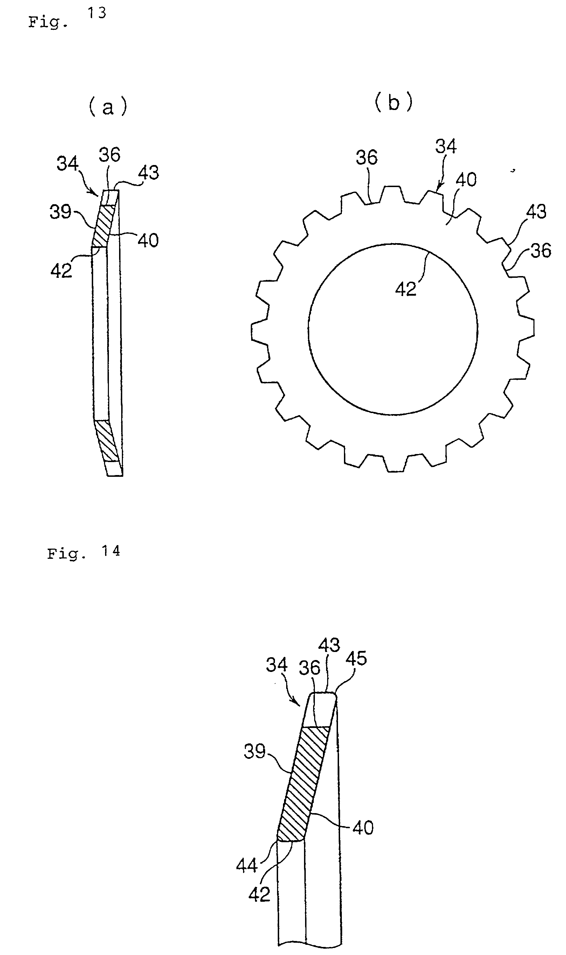

The spring plate 34 is formed in a shape of dish as shown in Figs. 13(a) and 13(b), having a uniform thickness in a radial direction. A face 39 to be pressed against, and facing, the piston 31 and the driving face 40 acting on the mating plate 32 are arranged mutually in parallel with each other and flat.

Teeth 36 are formed on the outer periphery of the spring plate 34 and are engaged with a drum 35 by means of splines.

The spring plate 34, when pressed by the piston 31, is sandwiched between the piston 31 and the mating place 32, being elastically deformed from a dish-like shape to a nearly flat shape. Since the driven face 39 and the driving face 40 of the spring plate 34 are mutually parallel and flat, the position of contact of the spring plate 34 with the piston 31 and the mating plate 32 hardly varies. That is, in Fig. 13(a), an inner diameter end portion 42 is in constant contact at the left corner with the piston 31, while an outer diameter end portion 43 is in constant contact at the right corner with the mating plate 32.

The spring plate 34 pressed by the piston 31 locally pushes with the right corner of the outer diameter end portion 43 the outer diameter end portion of the mating plate 32. Therefore, the mating plate 32 and friction material 37 of the friction plate 33 are mutually pressed more firmly at the outer diameter side than at other portions.

Therefore, greater frictional heat is generated at the outer diameter sides of both the mating plate 32 and the friction material 37, resulting in a high temperature of these members. In addition, since the frictional heat occurs locally on the outer diameter side and therefore can not easily escape, the result is a locally higher temperature in this area.

Therefore, the spring plate 34 has an inherent disadvantage in that, because of the parallelism and flatness of the driven face 39 and the driving face 40, each mating plate 32 is liable to heat distortion and the friction material 37 is also liable to non-uniform seizure.

The corners of the inner diameter end portion 42 and outer diameter end portion 43 of the spring plate 34 are provided with chamfers 44 and 45 as shown in Fig. 14; accordingly, the contact position of the spring plate 34 relative to the piston 31 and the mating plate 32 varies little by little. However, because the chamfers 44 and 45 are about 10% or less in the area of the driven face 39 and the driving face 40, the position subjected to a high temperature will hardly change.

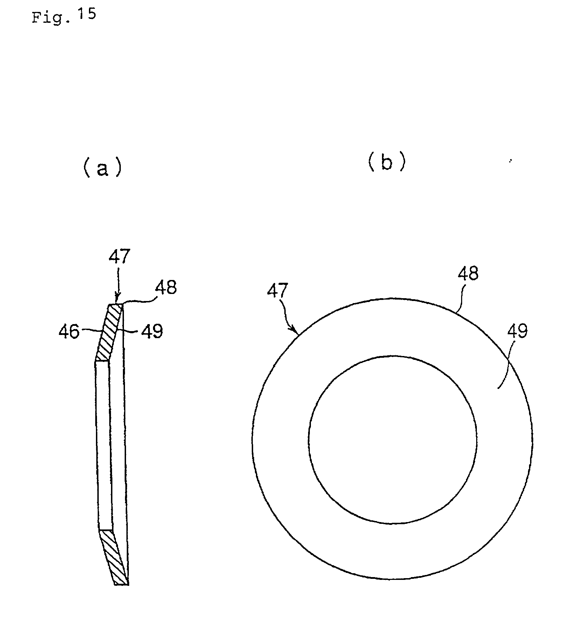

Some spring plates have no tooth on the outer periphery as shown in Figs. 15(a) and 15(b).

In the case of this spring plate 47 also, the driven face 46 and the driving face 49 are mutually parallel and flat, and the outer diameter end portion of the mating plate is locally pushed by the right corner of the outer diameter end portion 48; therefore the mating plate is liable to heat distortion and besides the frictional material is easily subjected to non-uniform seizure.

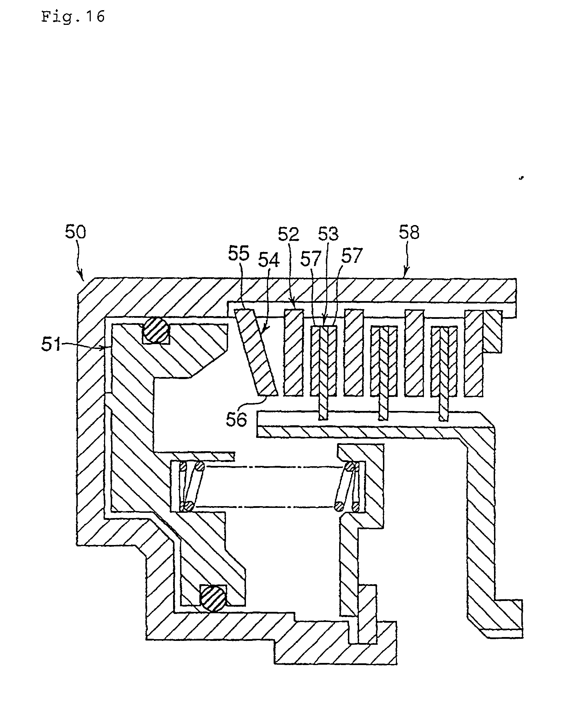

The spring plate 54 installed in a multiple disk clutch mechanism 50 shown in Fig. 16 is pressed at an outer diameter end portion 55 by a piston 51 and in turn a mating plate (mating member) 52 is pressed by the inner diameter end portion 56.

In this spring plate 54 also both the inner diameter end portion of the mating plate 52 and the inner diameter end portion of friction material 57 of the friction plate (mating member) 53 reach a high temperature, easily causing heat distortion of the mating plate 52 and non-uniform seizure of the friction material 57.

The spring plates 34 and 54 and the mating plates 32 and 52 are engaged by means of splines with the drums 35 and 58 to thereby rotate together with the drums 35 and 58, and therefore will not mutually make a relative rotating motion. The spring plate 47 shown in Fig. 15 is provided with no tooth for spline engagement; however, since the piston and the mating plate rotate together as a unit with the drum, the spring plate 47 also will hardly rotate relative to the mating plate.

Consequently there will never occur any frictional heat between the spring plates 34, 47 and 54 and the mating plates.

The spring plates 34, 47 and 54 also have the problem of the occurrence of non-uniform seizure and heat distortion of the mating member when assembled in a multi-disk brake mechanism (not illustrated).

Intemational Patent Application No. WO87/03348 discloses a wet disk clutch comprising an expanding element between each of plural inner and outer disks. These expanding elements move the individual inner disks away from the outer disks when the clutch is disengaged. The expanding elements are designed as cup springs, the outer edges of which are linked with the outer disks and the inner edges of which are applied against the inner disks. In the disengaged state of the clutch the cup springs rotate with the outer disks and slide over the inner disks.

U.K. Patent Application No. 2149863 discloses a hydraulic clutch according to the preamble of claim 1 comprising an annular disk spring interposed between a hydraulic piston and friction plates for engaging an disengaging a power saw. The hydraulic clutch supports an inner peripheral edge of the disk spring at a position spaced from the piston on a piston sliding shaft, making the disk spring contact the piston at a portion between its inner periphery and its outer periphery so forming a disk spring which is cone-shaped in cross-section from its inner periphery edge to its outer periphery.

### SUMMARY OF THE INVENTION

To solve the above-described problems, the present invention provides a multiple disk friction coupling device having a piston, a spring plate formed in a dish shape and a mating plate, arranged such that the spring plate is interposed between the piston and the mating plate, characterised in that the axial section of a driving face of the spring plate is composed of three or more straight lines, multi-stage curves or a combination of these lines.

When the spring plate of a coupling device in accordance with one embodiment of the present invention is pressed by the piston, the side face of either one of the inner and outer diameter end portions presses on the mating member. The spring plate of the present invention is then elastically deformed as it is pressed by the piston, so that an intermediate portion between the inner diameter end portion and the outer diameter end portion also presses on the mating member.

In the case of another embodiment of the present invention, when the spring plate is pushed by the piston, the intermediate portion between the outer diameter end portion and the inner diameter end portion of the mating member is pressed by a protruding radially intermediate portion of the spring plate. The spring plate in this case is subjected to elastic deformation when pushed by the piston, pressing in turn the mating member also by a portion close to the inner diameter end portion and the outer diameter end portion.

Therefore, when pressed by the piston against the mating member, the spring plate of the present invention elastically deforms and presses the mating member with a dispersed force while increasing the driving face area with respect to the mating member, thus operating the multiple disk friction coupling device.

In the multiple disk friction coupling device, the pressure to be applied to the friction coupling faces of a member to be mutually pressed becomes a dispersed pressure; therefore the friction coupling faces also will never be locally concentrically pressed.

Accordingly, the problem that some particular part of the friction coupling face will be locally heated to a high temperature if frictional heat is generated in the friction coupling face will not arise. Moreover, the central part at which the pressure is exerted is an intermediate part in a radial direction of the friction coupling face. Therefore, the frictional heat can easily escape in the radial direction of the friction coupling face and accordingly the friction coupling face will not be locally heated to a high temperature.

In the spring plate of the present invention, when installed in the multi-disk brake mechanism, the friction coupling faces of the friction coupling members will not locally rise to a high temperature.

In order that the invention may be readily understood, embodiments thereof will now be described, by way of example, with reference to the accompanying drawings.

### BRIEF DESCRIPTION OF THE DRAWINGS

Fig. 1(a) is sectional view taken along the axial direction of a spring plate of the one embodiment of the present invention;
Fig. 1(b) is a partly sectional view taken along the axial direction of the spring plate of the one embodiment of the present invention;
Fig. 2(a) is a sectional view taken along the axial direction of a spring plate of another embodiment of the present invention;
Fig. 2(b) is a right side view of Fig. 2(b);
Fig. 3 is a partly sectional view taken along the axial direction of the spring plate of yet another embodiment of the present invention;
Fig. 4 is a partly sectional view taken long the axial direction of the spring plate of still another embodiment of the present invention;
Fig. 5 is a partly sectional view taken along the axial direction of the spring plate of a farther embodiment of the present invention;
Fig. 6 is a partly sectional view taken along the axial direction of the spring plate of yet a further embodiment of the present invention;
Fig. 7 is a partly sectional view taken along the axial direction of the spring plate of still a further embodiment of the present invention;
Fig. 8 is a graph showing a result of measurements of pressure applied to the friction coupling faces of a mating plate and a friction plate when a prior art spring plate shown in Fig. 13 is in use and when a spring plate embodying the invention is in use;
Fig. 9 is a graph showing a result of measurements of temperature in the friction coupling faces of a mating plate and a friction plate when a prior art spring plate shown in Fig. 13 is in use and when the spring plate embodying the invention is in use;
Fig. 10 is a graph showing a result of measurements of pressure the mating plate receives from each spring plate when no spring plate is in use, when the prior art spring plate shown in Fig. 13 is in use, and when the spring plate embodying the invention is in use.
Fig. 11 is a graph showing a result of measurements of a difference of relative rotating speeds between the mating plate and the friction plate, a pressure of the mating plate for pushing the friction plate, and a torque to be transmitted between the mating plate and the friction plate, when the spring plate embodying the invention is used;
Fig. 12 is a sectional view taken along the axial direction of one multiple disk clutch provided with a prior art spring plate;
Fig. 13(a) is a sectional view taken along the axial direction of the prior art spring plate;
Fig. 13(b) is a right side view of Fig. 13(a);
Fig. 14 is an enlarged, pailly sectional view taken along the axial direction of the spring plate of Fig. 13(a);
Fig. 15 (a) is a sectional view taken along the axial direction of another prior art spring plate;
Fig. 15(b) is a right side view of Fig. 15(a); and
Fig. 16 is a sectional view taken along the axial direction of a multiple disk clutch provided with a prior art spring plate.

### DETAILED DESCRIPTION OF THE PREFERRED EMBODIMENTS

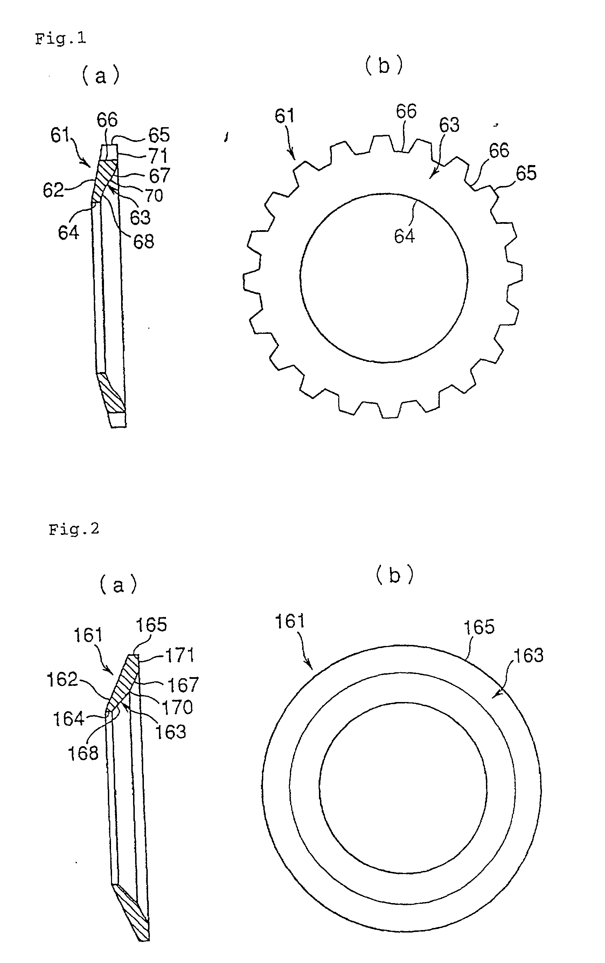

Preferred embodiments of spring plates according to the present invention will hereinafter be described with reference to Figs. 1 to 11.

Spring plates 61, 161, 261, 461 and 661 shown in Figs. 1 to 5 are generally dish-like elastic members installed in a multiple disk clutch mechanism shown in Fig. 12.

The spring plates, like prior art spring plates, are pushed by a piston to press the mating plate (mating member) and a friction plate into mutual contact, that is, into friction coupling.

The spring plate 61 shown in Fig. 1 has teeth 66 on the outer diameter end portion 65 and is engaged with a drum by means of splines. The spring plates 161, 261, 461 and 661 shown in Figs. 2 to 5 are not provided with teeth on the outer diameter end portions 165, 265, 465 and 665.

The spring plates 61, 161, 261 and 461 shown in Figs 1 to 4 are formed generally in a dish-like shape.

Intermediate portions 70, 170, 270 and 470 between the inner diameter end portions 64, 164, 264 and 464 and the outer diameter end portions 65, 165, 265 and 465 of the spring plates 61, 161, 261 and 461 protrude on the mating plate side.

The driven face 62, 162 and 262 of the spring plates 61, 161 and 261 shown in Figs. 1 to 3 are flat as in the prior art spring plate 34 shown in Fig. 12. The driven face is the face to be pushed by the piston.

Therefore the spring plates 611, 161 and 261 shown in Figs. 1 to 3 have non-uniform thickness as measured at right angles to the driven face.

The thickness of the spring plate 61 shown in Fig. 1 gradually increases from the inner diameter end portion 64 toward the outer diameter end portion 65.

The driving face 63 is comprised of a side face 71 of the outer diameter end portion 65, a circular projecting face 67, and a slant face 68 of the outer diameter end portion 65, the slant face 68 smoothly continuing the projecting face 67. The section of the slant face 68 may be either a curve or a straight line. That is, a straight line and curve in the section are usable in combination.

The spring plate 61 is elastically deformed with a dish-like shape into a flat-plate shape as it is pushed against the mating plate by the piston, the faces of the driving face 63 of the spring plate 61 being pressed into contact with the mating plate in the order of the side face 71, projecting face 67 and slant face 68, thereby frictionally coupling the mating plate with the friction plate.

The driving face 163 of the spring plate 161 shown in Fig. 2 is composed of a side face 171 of the outer diameter end portion 165, a slant face 167 having a sharp angle of inclination with respect to the axial centre of the spring plate 161, and a slant face 168 of the outer diameter end portion 165, the slant face 168 having a gentle angle of inclination so that the section will form a multi-stage straight line. By a "multi-stage" straight line is meant a continuous straight line with varied inclinations.

The spring plate 61 is elastically deformed from a dish-like shape into a flat-plate shape as it is pushed against the mating plate by the piston, the spring plate 161 being pressed into contact with the mating plate in the order of the side face 171, sharp slant face 167, and gentle slant face 168, thereby frictionally coupling the mating plate with the friction plate.

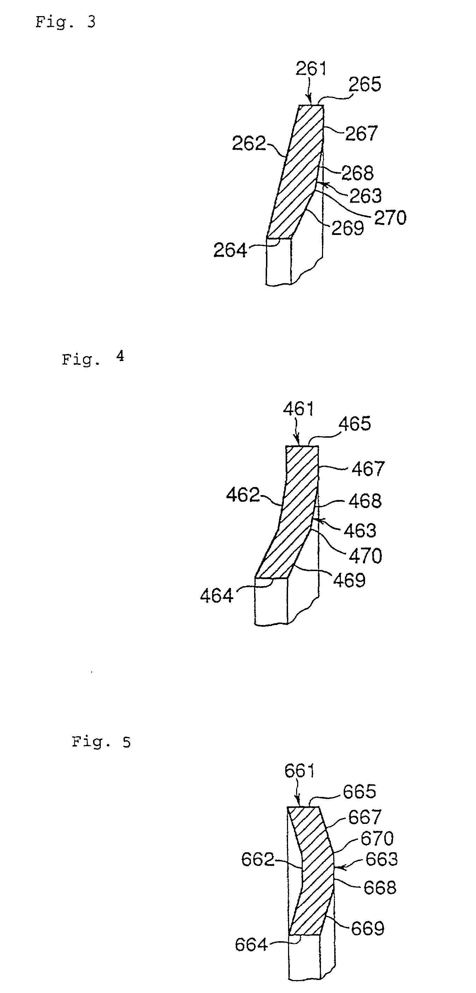

The intermediate portion 270 of the spring plate 261 shown in Fig. 3 is made thicker than an inner diameter end portion 264 and an outer diameter end portion 265.

The driving face 263 comprises a face 267 nearly perpendicular to the axial centre of the spring plate 261, a slant face 268 of sharp inclination, and a slant face 269 of gentle inclination, thereby forming a section of a multi-stage straight line.

The spring plate 261, when pushed by the piston, is pressed against the mating plate in the order of the perpendicular face 267, the sharp slant face 268 and the gentle slant face 269 while being elastically deformed from a dish-like shape into a flat-plate shape, thereby frictionally coupling the mating plate with the friction plate.

The spring plate 461 shown in Fig. 4 is nearly uniform in thickness. Accordingly, the spring plate 461 can more easily be manufactured by a pressing machine than the spring plates shown in Figs. 1 to 3.

A driven face 462 of the spring plate 461 shown in Fig. 4 is not straight but is recessed.

A driving face 463 is comprised of a face 467 nearly perpendicular to the axial centre of the spring plate 461, a slant face 468 of sharp inclination, and a slant face 469 of gentle inclination, thereby forming a section of a multi-stage straight line.

The spring plate 461, when pushed by the piston, is pressed against the mating plate in the order of the perpendicular face 467, the sharp slant face 468 and the gentle slant face 469 while being elastically deformed from a dish-like shape into a flat-plate shape, thereby frictionally coupling the mating plate with the friction plate.

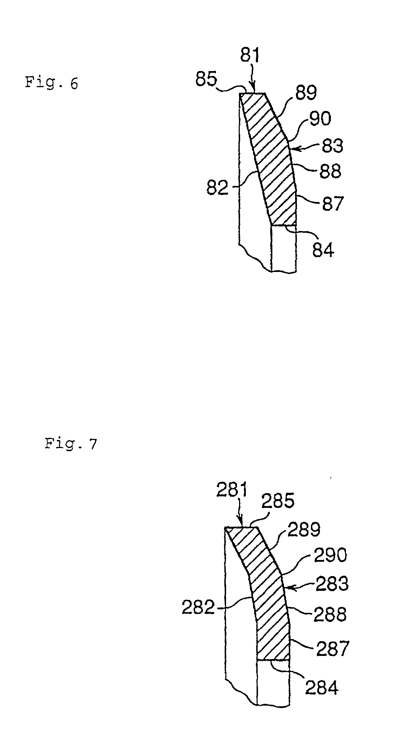

Intermediate portion 670 between the inner end portion 664 and the outer diameter end portion 665 in the spring plate 661 shown in Fig. 5 protrudes toward the mating plate side over either of the inner and outer end portions.

The driven face 662 of the spring plate 661 is recessed, forming a multi-stage straight line.

Furthermore, the thickness of the spring plate 661 is nearly uniform. Therefore the spring plate can more easily be manufactured by a pressing machine than the spring plates shown in Figs. 1 to 3.

The driving face 663 of the spring plate 661 shown in Fig. 5 is compose of three shaight lines 667, 668 and 669 in the sectional view. Of these three flat faces thus formed, the intermediate flat face indicated by reference numeral 668 is in the closest position to the mating place.

The spring plate 661, when pushed by the piston, is pressed against the mating plate in the order of the flat face 668 and the two flat faces 667 and 669, while being elastically deformed into a flat-plate shape, thereby frictionally coupling the mating plate with the friction plate.

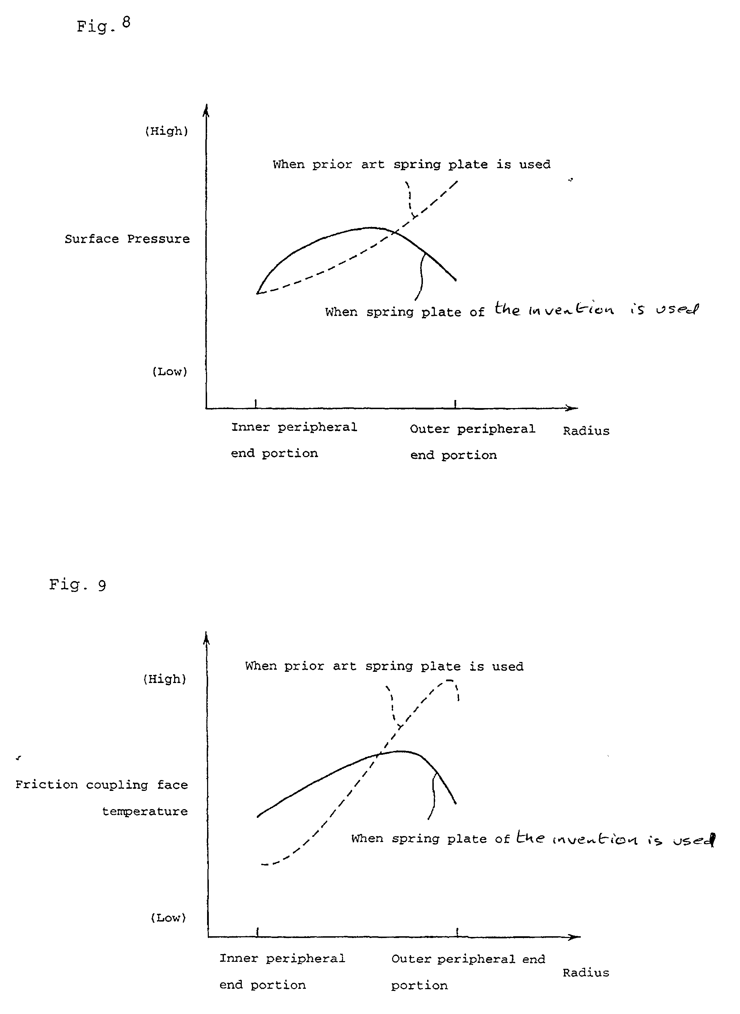

The spring plates 81 and 281 shown in Figs. 6 and 7 are dish-like elastic members to be installed in the multiple disk clutch mechanism of Fig. 16.

These spring plates, like prior art spring plates, are pushed by the piston into mutual contact for friction coupling between the mating plates and the friction plates.

The spring plates 81 and 281 shown in Figs. 6 and 7 are formed generally in a dish-like shape.

Intermediate portions 90 and 290 between the inner diameter end portions 84 and 284 and the outer diameter end portions 85 and 285 in these spring plates 81 and 281 protrude out toward the mating plate side.

Driven face 82 of the spring plate 81 shown in Fig. 6 is flat similarly to the prior art spring plates 54 shown in Fig. 16. The driving face 83 of the spring plate 81 protrudes out toward the mating plate side.

Therefore the thickness of the spring plate 81 shown in Fig 6. is non-uniform.

The intermediate portion 90 of the spring plate 81 shown in Fig. 6 is made thicker than the inner diameter end portion 84 and the outer diameter end portion 85.

The driving face 83 is composed of face 87 perpendicular to the axial centre of the spring plate 81, a slant face 88 of sharp inclination, and a slant face 89 of gentle inclination which form a section of multi-stage straight lines.

The spring plate 81, when pushed by the piston, is pressed against the mating plate in the order of the perpendicular face 87, the sharp slant face 88 and the gentle slant face 89 while being elastically deformed from a dish-like shape into a flat-plate shape, thereby frictionally coupling the mating plate with the friction plate.

The thickness of the spring plate 281 shown in Fig. 7 is nearly uniform. The spring plate 281 can therefore be more easily manufactured by a pressing machine than the spring plates shown in Figs. 1 to 3.

The driven face 282 of the spring plate 281 shown in Fig. 7 is recessed.

The driving face 283 of the spring plate 281 shown in Fig. 7 is composed of a face 287 nearly perpendicular to the axial centre of the spring plate 281, a slant face 288 of sharp inclination, and a slant face 289 of gentle inclination, thereby forming a section having multi-stage straight lines.

The spring plate 281, when pushed by the piston, is pressed against the mating plate in the order of the perpendicular face 287, the sharp slant face 288 and the gentle slant face 289 while being elastically deformed from a dish-like shape into a flat-plate shape, thereby frictionally coupling the mating plate with the friction plate.

In any of the spring plates shown in Figs. 1 to 7, the contact surface area of the driving faces 63, 163, 263, 463, 663, 83 and 283 facing the mating plate increases in the radial direction of the spring plate with an increase in the radial direction of the spring plate with an increase in the pressure of the piston. Also the centre of the pressure of the spring plate to the mating plate moves radially.

The pressure of the spring plate, therefore, is applied over a large area of the mating plate, and will never be locally concentrated.

A large part of frictional heat caused by friction coupling between the mating plate and the friction plate is produced and dispersed widely in the intermediate portion of the spring plate.

Therefore the mating plate and the friction plate will not suffer locally high temperatures. Accordingly, heat distortion does not readily occur in the mating plate and furthermore non-uniform seizure does also not readily occur in the friction material.

Fig. 8 is a graph showing a result of measurements of a pressure on the friction coupling faces of the mating plate and the friction plate when the prior art spring plate 34 shown in Fig. 13 and when a spring plate embodying the present invention is used.

It is clear from Fig. 8 that the pressure on the friction coupling faces reaches the maximum value at the outer peripheral end portion when the prior art spring plate is used and at the intermediate portion in the radial direction when the spring plate of the present invention is used.

Fig. 9 is a graph showing a result of measurements of temperature in the friction coupling faces of the mating plate and the friction plate when the prior art spring plate 34 shown in Fig. 13 and when a spring plate of the present invention is used.

It is understood from Fig. 9 that the temperature in the friction coupling faces reaches the maximum value at the outer peripheral end portion of the mating plate and the friction plate when the prior art spring plate is used at the intermediate portion in the radial direction when the spring plate of the present invention is used.

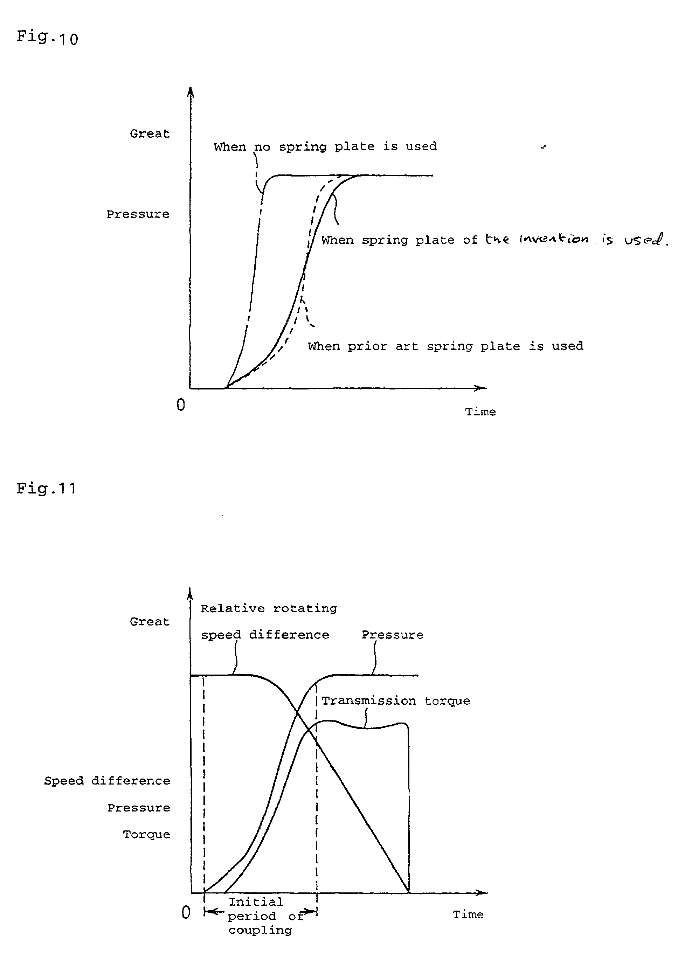

Furthermore Fig. 10 is a graph showing the result of measurements of pressure which the mating plate receives from the spring plate, with the lapse of time, when no spring plate is used, when the prior art spring plate 34 shown in Fig. 13 is used, and when the spring plate of the present invention is used.

From Fig. 10 it is clear that, when the spring plate of the present invention is used, the pressure gradually increases with the lapse of time.

That is, the spring plate of the invention has such a superior characteristic that sudden torque transmission which is likely to occur at the time of friction coupling between the mating plate and the friction plate can be eased more by the use of the spring plate of the present invention than by the use of no spring plate or by the use of a prior an spring plate.

Finally, fig. 11 is a graph showing the result of measurements of the difference in the relative rotating speed between the mating plate and the friction plate when the spring plate of the invention is used, the pressure required by the mating plate to press the friction plate, and the transmission torque between the mating plate and the friction plate with the lapse of time. The frictional heat occur chiefly in the period until the mating plate and the friction plate begin to rotate at the same speed.

In Fig. 11, the "initial period of coupling" means the initial stage of friction coupling between the mating plate and the friction plate.

The spring plates of Figs. 1 to 3 are unlikely to cause heat distortion to occur in the mating plate and produce little non-uniform seizure in the friction material if installed in a multi-disk brake mechanism (not illustrated).

The spring plate of the present invention, therefore, has the advantage that the fiction coupling members of a multiple disk friction coupling device will not be locally heated to a high temperature, thereby preventing heat distortion and non-uniform seizure and accordingly ensuring smooth operation for a prolonged period of time.

Furthermore, the spring plate of the present invention can mitigate sudden torque transmission during the initial period of friction coupling in relative rotating operation more than prior art ones.

Furthermore, the spring plate can easily be manufactured by, for instance, a pressing machine when the spring plate thickness is nearly uniform.

## Claims

1. A multiple disk friction coupling device having a piston (31), a spring plate (61, 161, 261, 461, 661, 81, 281) formed in a dish shape and a mating plate (32) arranged such that the spring plate (61, 161, 261, 461, 661, 81, 281), is interposed between the piston (31) and the mating plate (32), characterised in that the axial section of a driving face (63, 163, 263, 463, 663, 83, 283) of the spring plate (61, 161, 261, 461, 661, 81, 281) facing the mating plate (32) is composed of three or more straight lines, multi-stage curves or a combination of these lines.

2. A coupling device according to Claim 1 wherein the spring plate (61, 161, 261, 461, 661, 81, 281) is constructed such that, when the spring plate is pressed by the piston (31) the spring plate (61, 161, 261, 461, 661, 81, 281) deforms elastically and presses the mating plate (32) in a pre-determined way.

3. A coupling device according to Claim 1 or 2, wherein an intermediate portion (70, 170, 270, 470, 670) of the spring plate (61, 161, 261, 461, 661) between an inner portion (64, 164, 264, 464, 664), and an outer portion (65, 165, 265, 465, 665) of the spring plate (61, 161, 261, 461, 661) protrudes from the driving face (63, 163, 263, 463, 663) towards the mating plate (32).

4. A coupling device according to Claim 1 or 2, wherein an inner portion (85, 285) of the spring plate (81, 281) protrudes from the driving face (83, 283) towards the mating plate (32).

5. A coupling device according to any preceding Claim, wherein the thickness of the spring plate (461, 661, 281) is nearly uniform.

## Patentansprüche

1. Reibkupplungsvorrichtung mit mehreren Scheiben, die einen Kolben (31) aufweist, eine Federplatte (61, 161, 261, 461, 661, 81, 281), die tellerförmig ausgebildet ist, und eine damit zusammenwirkende Platte (32), wobei die Anordnung so ist, daß die Federplatte (61, 161, 261, 461, 661, 81, 281) zwischen dem Kolben (31) und der zusammenwirkenden Platte (32) angeordnet ist, dadurch gekennzeichnet, daß der axiale Querschnitt einer antreibenden Fläche (63, 163, 263, 463, 663, 82, 283) der Federplatte (61, 161, 261, 461, 661, 81, 281), die der zusammenwirkenden Platte (32) gegenübersteht, aus drei oder mehr geraden Linien, mehrstufigen Kurven oder aus einer Kombination aus diesen Linien zusammengesetzt ist.

2. Reibkupplungsvorrichtung nach Anspruch 1, dadurch gekennzeichnet, daß die Federplatte (61, 161, 261, 461, 661, 81, 281) so konstruiert ist, daß wenn die Federplatte durch den Kolben (31) beaufschlagt wird, die Federplatte (61, 161, 261, 461, 661, 81, 281) sich elastisch verformt und die zusammenwirkende Platte (32) in einer vorbestimmten Weise beaufschlagt.

3. Reibkupplungsvorrichtung nach Anspruch 1 oder 2, dadurch gekennzeichnet, daß ein Zwischenabschnitt (70, 170, 270, 470, 670) der Federplatte (61, 161, 261, 461, 661) zwischen einem inneren Abschnitt (64, 164, 264, 464, 664) und einem äußeren Abschnitt (65, 165, 265, 465, 665) der Federplatte (61, 161, 261, 461, 661) von der antreibenden Fläche (63, 163, 263, 463, 663) in Richtung auf die zusammenwirkende Platte (32) vorsteht.

4. Reibkupplungsvorrichtung nach Anspruch 1 oder 2, dadurch gekennzeichnet, daß ein innerer Abschnitt (85, 285) der Federplatte (81, 281) von der antreibenden Fläche (83, 283) in Richtung auf die zusammenwirkende Platte (32) vorsteht.

5. Reibkupplungsvorrichtung nach einem der vorangehenden Ansprüche, dadurch gekennzeichnet, daß die Dicke der Federplatte (461, 661, 281) nahezu gleichmäßig ist.

## Revendications

1. Appareil d'accouplement à lamelles multiples par friction, comprenant un piston (31), un disque élastique (61, 161, 261, 461, 661, 81, 281) revêtant la forme d'une cuvette, et un disque complémentaire (32) agencé de telle sorte que le disque élastique (61, 161, 261, 461, 661, 81, 281) soit interposé entre le piston (31) et le disque complémentaire (32), caractérisé par le fait que la section axiale d'une face d'entraînement (63, 163, 263, 463, 663, 83, 283) du disque élastique (61, 161, 261, 461, 661, 81, 281), tournée vers le disque complémentaire (32), est composée de trois lignes droites ou plus, de courbes à plusieurs paliers, ou d'une combinaison de ces lignes.

2. Appareil d'accouplement selon la revendication 1, dans lequel le disque élastique (61, 161, 261, 461, 661, 81, 281) est d'un agencement structurel tel que, lorsque le disque élastique est pressé par le piston (31), ledit disque élastique (61, 161, 261, 461, 661, 81, 281) se déforme élastiquement et presse le disque complémentaire (32) d'une manière prédéterminée.

3. Appareil d'accouplement selon la revendication 1 ou 2, dans lequel une région intermédiaire (70, 170, 270, 470, 670) du disque élastique (61, 161, 261, 461, 661), entre une région intérieure (64, 164, 264, 464, 664) et une région extérieure (65, 165, 265, 465, 665) du disque élastique (61, 161, 261, 461, 661), dépasse au-delà de la face d'entraînement (63, 163, 263, 463, 663) en direction du disque complémentaire (32).

4. Appareil d'accouplement selon la revendication 1 ou 2, dans lequel une région intérieure (85, 285) du disque élastique (81, 281) dépasse au-delà de la face d'entraînement (83, 283), en direction du disque complémentaire (32).

5. Appareil d'accouplement selon une quelconque revendication précédente, dans lequel l'épaisseur du disque élastique (461, 661, 281) est quasiment uniforme.
